# EUROPEAN PATENT APPLICATION

(11) **EP 4 847 208 A1**
(43) Date of publication of application: **02.12.2026**
(21) Application number: 25179921.9
(22) Date of filing: 30.05.2025
(51) Int. Cl.: B25J 9/16

(54) **METHOD AND SYSTEM FOR SIMULATING A MOTION BEHAVIOR OF AN INDUSTRIAL ROBOT EXECUTING A ROBOTIC PROGRAM**

(71) Applicant: Siemens Industry Software Ltd., 7019900 Airport City (IL)
(72) Inventor: Hazan, Moshe, 4083918 Elad (IL)
(74) Representative: Siemens Patent Attorneys

(57) **Abstract**

System and a method for simulating a motion behavior of a specific industrial robot executing a robotic program within an industrial environment. A surface envelope of a robot and its tool is represented as a collection of a subset of their surface points. Robotic location pair data are received e.g. source location, target location, motion parameters for executing a segment of the robotic program. For each pair, a motion envelope predictor is applied, the predictor is trained by a machine learning algorithm and is configured for generating as output a sequence of robot's envelopes predicting the motion behavior of the robot moving between said location pair. The motion behavior of the robot executing the set of robotic program segments in an industrial environment is simulated via a 3D application as a dynamic motion envelope of the predicted set of sequences of robotic envelopes.

## Description

### TECHNICAL FIELD

The present disclosure is directed, in general, to computer-aided design, visualization, and manufacturing (CAD) systems, product lifecycle management (PLM) systems, product data management (PDM) systems, and similar systems, that manage data for products and other items (collectively, "Product Data Management" systems or PDM systems). More specifically, the disclosure is directed to production environment simulation. The present disclosure is also directed to the control and/or command of a robot based on a robotic simulation result.

### BACKGROUND OF THE DISCLOSURE

In industrial scenarios, to validate robotic operations at the shopfloor, manufacturing companies make use of robotic software applications. Examples of robotic software applications include, but are not limited to, Computer Assisted Robotic (CAR) tools, Process Simulate (a product of Siemens PLM software suite) and other robotic simulation tools.

Industrial users make use of such robotic simulation tools to simulate the kinematic motion behavior of industrial robots in their three-dimensional (3D) industrial environment usually consisting of robotic cells at the shop floor. Industrial users utilize such robotic simulation tools to create, edit, validate and/or simulate robotic programs of the robots for example for validation and collision avoidance purposes. Once validated, the robotic program of the virtual robot can advantageously be downloaded and used by the real robot to perform its robotic tasks at the real shopfloor.

With the term robotic program, it is herein generally intended a set of robotic instructions needed for the robot to perform its robotic tasks. Typical examples of robotic tasks, include but are not limited to, welding, coating, picking, palletizing. A typical robotic program includes at least the list of coordinates of the robotic target locations where the robotic tasks are to be performed by the robotic tool, hereby such robotic targets list may be called robotic target path or simply robotic path. As used herein the terms robotic targets, target locations, targets path, or simply path denote the targets list where the target coordinates value can be given in various different coordinate representations e.g. cartesian coordinates or joint value coordinates. Beside the robotic path data, the robotic program typically includes also other robotic program related data like e.g. motion parameters like speed, acceleration, fine etc. and OffLine Programming commands.

To simulate the motion behavior of an industrial robot executing its robotic program, CAR tools require a kinematic model of the virtual robot, a motion planner and a kinematic engine for kinematic computations. A kinematic model of the robot describes the kinematic capabilities of the robot such as joint types (e.g. revolute, prismatic), link lengths, degrees of freedom etc. For example, a kinematic model of an industrial robot comprises the description of its kinematic joints (e.g. J1, J2, .., J6). The kinematic motion behavior of the robot is given via its kinematic model and with its list of tuples of poses of the robot with their delta times Δt, whereby e.g. the poses are usually given as six joint values vectors. Examples of motion planners comprise, but are not limited by, Realistic Robot Simulation (RRS), Virtual Robotic Controllers (VRC), generic motion planners and AI-based planners.

However, there are certain industrial scenarios where the above conditions to simulate a motion behavior of industrial robots are not meet.

In fact, in some industrial scenarios, industrial users need to simulate the motion behavior of industrial robots which have no kinematic model as for example is the case for delta robots. In other industrial scenarios, industrial users need to simulate the motion behavior of new industrial robots of new robotic vendors which do not support RRS as motion planner and for which a generic motion planner is not accurate enough.

Therefore, improved techniques for simulating the motion behavior of a robot are desirable.

### SUMMARY OF THE DISCLOSURE

Various disclosed embodiments include methods, systems, and computer readable mediums for simulating a motion behavior of a specific industrial robot executing a robotic program within an industrial environment. A method comprises representing a surface envelope of a robot and its tool as a collection of a subset of their surface points described by their 3D coordinates, herein robot's envelope. The method further includes receiving data of a set of pairs of robotic locations said location pair data comprising data on a source location, on a target location, on a set of motion parameters of the robot's tool required for executing a segment of the robotic program. The method further includes for each robotic location pair, applying a motion envelope predictor - herein ME predictor, trained by a machine learning ("ML") algorithm with training data comprising a robotic location pair and a corresponding sequence of robot's envelopes where the ME predictor is configured for generating as output a sequence of robot's envelopes predicting the motion behavior of the robot moving between said location pair. The method further comprises simulating in a 3D industrial environment, via a 3D application, the motion behavior of the robot executing the set of robotic program segments as a dynamic motion envelope of the predicted set of sequences of robotic envelopes.

Various disclosed embodiments include methods, systems, and computer readable mediums for generating a training dataset for training a motion envelope predictor configured for outputting a sequence of envelopes of a specific robot. A method comprises receiving data on several robotic location pairs comprising data on a source location, on a target location with associated motion parameters. The method further comprises, for each location pair, receiving data on a sequence of robot's envelopes capturing at time-intervals the robot's motion behavior during its motion between the location pair; wherein the location pair is collected for populating an input training dataset and the corresponding sequence of robot's envelopes is collected for populating an output training dataset. The method further comprises storing the input and output training dataset to train a ML model of the motion envelop predictor.

Various disclosed embodiments include methods, systems, and computer readable mediums for providing a ML module for outputting a sequence of robot's envelops predicting the motion behavior of a specific robot. The method comprises receiving a training dataset with a first interface, wherein said training dataset comprises an input training dataset and an output training dataset, wherein the input training dataset comprises several robotic location pairs comprising data on a source location, on a target location with associated motion parameters; and the output training dataset comprises, for each robotic location, a corresponding sequence of robot's envelopes. The method further comprises training the ML module with the input and output training datasets. The method further comprises providing said trained ML module with a second interface.A data processing system comprising a processor and an accessible memory or database is also disclosed, wherein the data processing system is configured to implement any of the described methods. Embodiments propose also a non-transitory computer-readable medium encoded with executable instructions that, when executed, cause one or more data processing systems to perform any of the described methods.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

A data processing system comprising a processor and an accessible memory or database is also disclosed, wherein the data processing system is configured to implement the previously described method. Embodiments propose also a non-transitory computer-readable medium encoded with executable instructions that, when executed, cause one or more data processing systems to perform the previously described methods.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented.
Figure 2 illustrates a flowchart for simulating a motion behavior of a robot executing a robotic program in accordance with disclosed embodiments.
Figures 3A illustrates a block diagram for simulating a motion behavior of a robot executing a robotic program in accordance with disclosed embodiments.
Figures 3B illustrates a sequence of graphical frames for simulating a motion behavior in accordance with disclosed embodiments.

### DETAILED DESCRIPTION

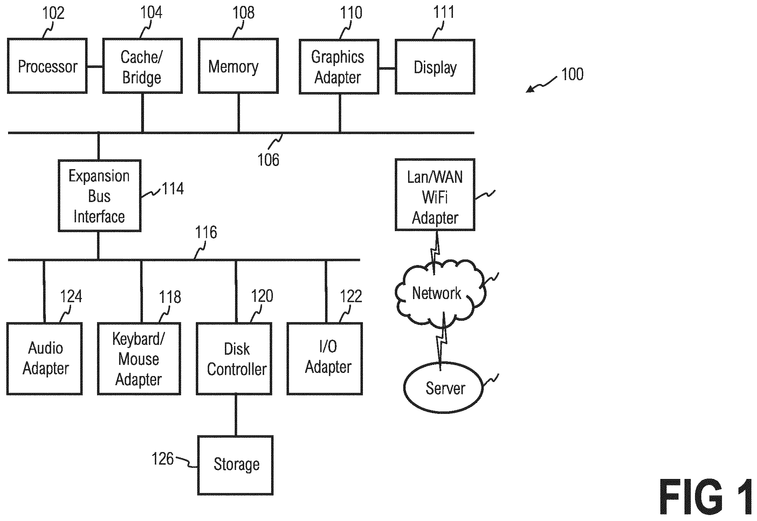

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques for simulating the motion behavior of a virtual robot have some drawbacks. The embodiments disclosed herein provide numerous technical benefits, including but not limited to the following examples.

Embodiments enable to simulate the motion behavior of a robot without a robot's kinematic model, without requiring sort of motion planner and/or without any kinematic engine.

Embodiment enable to play a robotic simulation of a specific virtual robot without the need of having a kinematic model of the robot, without utilizing a motion planner for the robot and/or without using any kinematic engine.

Embodiments enable running a simulation in a robotic simulation tool without the need of a connection to the VRC controller. Advantageously, users do not need a VRC license. Additionally, by running the simulation tool disconnected from the VRC controller, better performances may be achieved since for example there is no need of synchronization and no need of reaching an external server.

Embodiments may be used for robot validation purposes.

Embodiments provide a ML-based solution for kinematic simulation.

Embodiments enable to simulate a robot's motion behavior in a fast manner.

Embodiments enable to simulate a robot's motion behavior without performing complex calculations.

Embodiments reduces costs.

Embodiments enable to support new types of industrial robots.

Embodiments enable to control and/or command of a robot based on a robotic simulation result.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but are not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

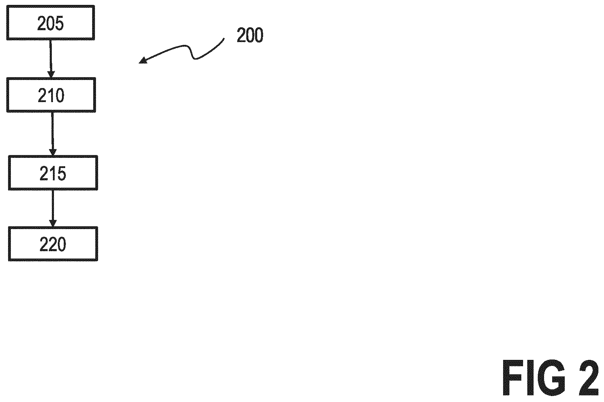

Figure 2 illustrates a flowchart 200 of a method for simulating a motion behavior of an industrial robot executing a robotic program within an industrial environment in accordance with disclosed embodiments. Such method can be performed, for example, by system 100 of Figure 1 described above, but the "system" in the process below can be any apparatus configured to perform a process as described. Of course, the "system" in the following description of the method according to embodiments can be any apparatus suitable for performing the described process.

At act 205, the system represents a surface envelope of a robot and its tool as a collection of a subset of their surface points having 3D coordinates; herein robot's envelope. As used herein the term envelope denotes the robot's external surface or its spatial boundary in the 3D space.

At act 210, the system receives data of a set of pairs of robotic locations said location pair data comprising data on a source location, on a target location, on a set of motion parameters of the robot's tool required for executing a segment of the robotic program.

At act 215, the system applies, for each robotic location pair, a motion envelope predictor - herein ME predictor, trained by a machine learning algorithm with training data comprising a robotic location pair and a corresponding sequence of robot's envelopes where the ME predictor is configured for generating as output a sequence of robot's envelopes predicting the motion behavior of the robot moving between said location pair.

At act 220, the system, via a 3D application, simulates in a 3D industrial environment, the motion behavior of the robot executing the set of robotic program segments as a dynamic motion envelope of the predicted set of sequences of robotic envelopes.

In embodiments, the ME predictor is trained via a regression supervised algorithm.

In embodiments, at act 220, the system loads a robot's initial envelop at an initial robot's pose at a robot's base position; wherein said robot's initial envelop is received from the ME predictor by inputting an initial pair of robotic locations.

### Algorithms of exemplary embodiments to synthetically generate training datasets

Exemplary embodiments illustrate the main algorithm phases and steps to generate training datasets for training a ML model of a ME predictor configured for outputting a sequence of robot's envelopes. For this purpose, the data processing system 100 might be further configured in accordance with embodiments.

In embodiments, the ME-predictor training datasets may be generated either utilizing for a specific industrial robot either its real physical robot moving in a physical environment or its virtual representation e.g. the virtual robot in a virtual simulation tool when the kinematic model is present.

In embodiments, the synthetic training dataset may be generated as follows.

The system generates a very large number of synthetic robotic segments. As used herein a "robotic segment" denotes a motion instruction from a current/source robotic location L_{S} with zero speed (stop) to a final/target location L_{T} with a zero speed (stop). Examples of motion parameters include, but are not limited by, motion type, speed, zone, acceleration, configuration. In embodiments, the system generates source and target locations that are reachable by the robot. In embodiments, each robotic segment comprises:
- Source location L_{S} (X, Y, Z, RX, RY, RZ) with its motion parameters
- Target location L_{T} (X, Y, Z, RX, RY, RZ) with its motion parameters, where the zone parameter value is set to *"fine"* so that the robot stops there.
- Optionally, between the couple of source and target locations (L_{S}, L_{T}) the robotic segment may comprise an intermediate location L_{M} with its motion parameters whereby the zone parameter value is set different that *"fine"* so that the robot does not stop there in the middle and continues until the final target location L_{T}.

In a subsequent phase, the system sends the robotic segments to the robot (virtual or physical) that executes them and moves along the segment. The motion behavior of the moving robot is utilized to extract output training dataset for the ME predictor.

*Virtual scenario:* The system connects to a motion planner module and runs the robotic simulation on the generated robotic segments. Examples of motion planner module include, but are not limited to, RRS modules, VRC modules, generic motion planners and AI-based motion planners. In embodiments, the training dataset of the virtual scenario is generated by utilizing a robot's kinematic model, a motion planner and a kinematic usage. It is noted that after the completion of the ML-module training phase, the ML-trained ME predictor is capable to infer or predict robotic motion envelops to newly applied input data without needing any of the three elements - e.g. kinematic model, motion planner and kinematic engine - which have been utilized to generate the training datasets in the virtual scenario.

*Physical-scenario:* The system sends the robotic segments to a real physical robot that executes them in physical environment which can be a real robotic cell or a test environment.

During the motion of the robot (virtual or physical), the system collects the robotic segment data and the corresponding sequence of robotic surface envelopes at each motion step as lists of 3D points data - a list of 3D surface points representing the robot's surface at each motion step. The system populates the input training dataset with the collected robotic segment data <L_{S}, L_{T}, motion parameters> and the output training dataset with the corresponding sequence of robotic surface envelops <E1,.., E_{N}> that tracks the trajectory of the robot's movement at step/time i.

In embodiments, the robot's motion is tracked by collecting along discrete times or motion steps the 3D surface data capturing the robot's position in the 3D space. In embodiments, the collected spatial data is organized as a structured collection as sequence of list of 3D points. For example, to perform a step-by-step motion tracking, the system collects at each step i a robot envelope Ei representing the robot's surface in the 3D space and generates a dataset describing the robot's motion trajectory <E1, E2,.., E_{N}> where each Ei represents the set of robot's surface points or robot's envelop at step i.

*Virtual scenario:* For a virtual robot in a CAR tool, the system generates and tracks the robot's surface points. In embodiments, the system generates a collection of 3D points distributed along the robot's external surface e.g. RobotEnvelop Ei = {P1, P2, ..., P_{M}} where M is the number of the points of the external surface or herein envelop. The system tracks the points of the robot's envelop at each step i along the robot's motion from source to target (L_{S}, L_{T}), providing a sequence of N robot's envelops <E1, E2,.., E_{N}> representing the motion behavior of the robot's surface in the 3D space at each captured step.

*Physical scenario:* For a real physical robot, the data processing system receives data from camera modules configured to capture the robot's surfaces or envelops during the real robot' motion moving from a source to a target location (L_{S}, L_{T}). With the term camera module or broadly camera is herein intended a set of units including a 2D camera with onboard processing of computer vision algorithms, 3D cameras (e.g. depth cameras, stereo cameras, LiDAR) which capture surface points of a physical object and/or any combination of sensing units configured to track surface points of a moving object. In embodiments, a set of cameras is positioned in the physical environment to track the robot's motion behavior from different point of views. During real-world motion, as the robot moves from source to target locations (L_{S}, L_{T}), the set of cameras captures a set of surface representations at each step and provides image data. In embodiments, the system processes the image data to extract the 3D coordinates of specific points of the robot's surface. The system compiles the extracted points into a list for each step of the motion e.g. envelop points Ei = {P1, P2, ..., P_{M}} to obtain a sequence of envelops <E1, E2,.., E_{N}> representing the robot's motion trajectory. Advantageously, with this approach, the system receives training datasets from physical world measurements of the robot's motion without the need of modifying the robots or without requiring internal sensors.

In embodiments, the training datasets are organized and described in manners that are suitable to define datasets for ML training. In embodiments, the synthetic generation of training datasets may conveniently be repeated for different types of robot models and for different types of input and output datasets etc.

In embodiments, the robotic source and target locations may conveniently be given as relative to a given reference frame of the specific robot. Preferably, the given reference frame of the specific robot may be the robot base frame as it is typically the case with downloaded robotic programs. Advantageously, in this manner, different base positions of specific robots can be flexibly supported by the ML predictor of the motion robotic envelop.

In summary, the robot's envelopes sequences for training purposes may be obtained in a virtual and/or in a physical scenario - respectively by capturing the specific robot's motion behavior of the virtual robot in a virtual environment via the robot's kinematic model and/or by capturing the specific robot's motion behavior of the physical robot in a physical environment.

In exemplary embodiments of virtual scenarios, the robot may be a specific model of an ABB or a KUKA robot where the robot's kinematic model is available for training. The received virtual robot may preferably be used within a robotic simulation tool to synthetically generate the training datasets for the given robot. The training datasets are specific for the given type of robot and are then used to train the ML-module for the specific given robot. In embodiments, the input training dataset consists of several sets of robotic locations pairs of the robot and the output training dataset consists of the sets of corresponding sequence of robot's envelops sampled at step 1,..i..,N along the simulation interval. In embodiments, the data are organized in manners that are suitable to define output datasets both for ML training and ML module usage.

In exemplary embodiments of generating training datasets in a physical scenario, the robot may be a specific model of a delta robot where the robot's kinematic model is not available for training.

### Algorithms of exemplary embodiments to train the ML model of the motion envelop predictor

Exemplary embodiments illustrate the main algorithm phases and steps to provide a ML-trained motion envelop predictor are illustrated below. For this purpose, the data processing system 100 according to embodiments might be further configured to provide a ML-trained motion envelop predictor.

The algorithm of the ML model for a given robot may preferably supervised learning. In embodiments, the ML module of a given robot is taught with the input training dataset comprising data from robotic segments and the output training dataset comprising the corresponding sequence of robotic envelops.

The learned function is such that it can map at its best the input datasets into the output datasets. The goal of the used ML algorithm is to approximate the mapping function so well that for a given robotic segment, the corresponding sequence of robotic envelops can be predicted as output data for that given input data. Extracted learned function data are used to generate and provide a trained ML motion envelop predictor 303 for the specific robot.

The ML-trained module 303 predicts the robot's motion envelop of this specific robot so that when receiving as input a robotic location couple or robotic segment 302 it provides as resulting output the corresponding robot's motion envelop 310.

### Algorithms of exemplary embodiments to simulate a motion behavior of a robot

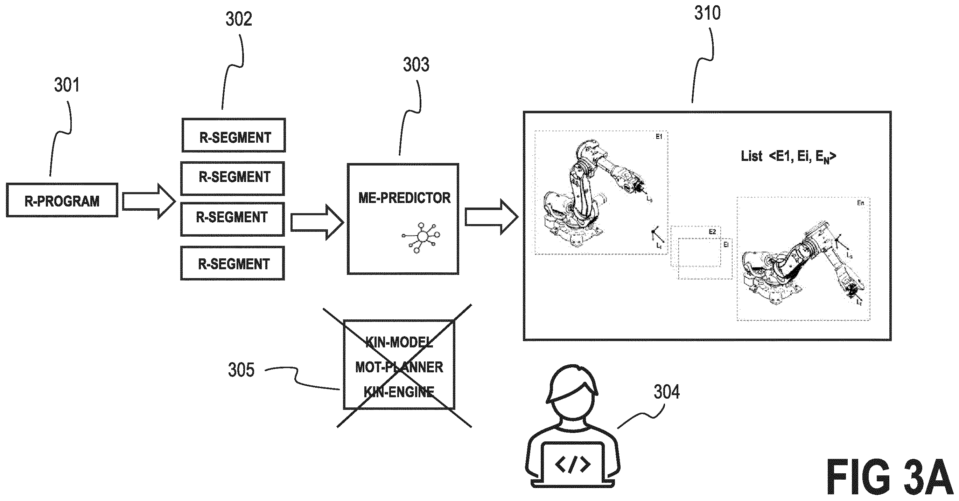

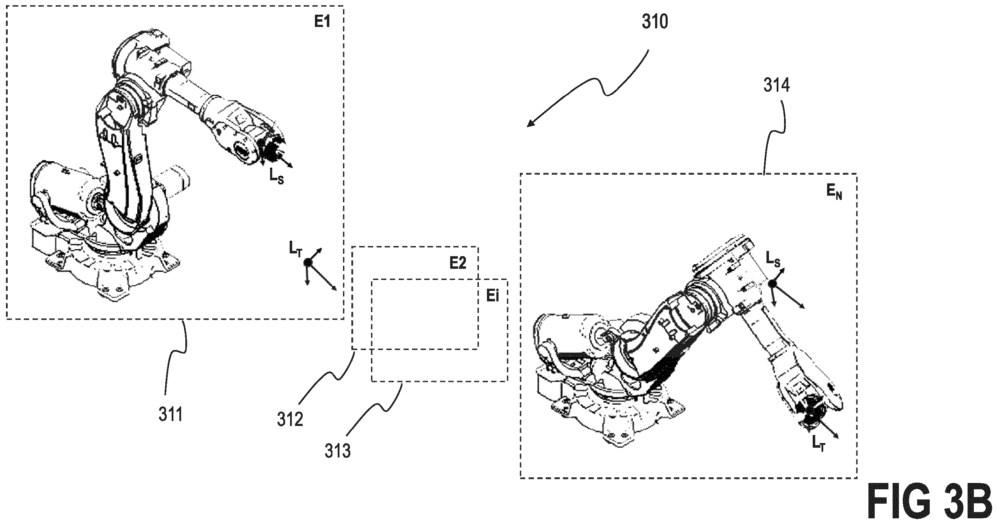

In exemplary embodiments, the main algorithm phases and steps to simulate the robot's motion behavior are illustrated with the help of Figure 3.

Figure 3A illustrates a block diagram for simulating a motion behavior of a robot executing a robotic program in accordance with disclosed embodiments.

A user 304 wishes to simulate the motion behavior of a specific robot executing a robotic program 301. The robotic program 302 is divided into a set of robotic segments 302 each comprising a pair of source and target locations (L_{S}, L_{T}) along with associated motion parameters. By applying the ME predictor 303 to each of the robotic segments 302 the user receives as output a set of sequences of robotic motion envelopes 310 that predicts the motion envelope trajectory of the robot's movement during the execution of the robotic program 301.

Embodiments provide a ML-trained module configured to predict the 3D surface volume of the robot movement while executing the instructions of each robotic segment. Advantageously, the user can inspect the robot's motion behavior via the 3D application, validate it, check collisions and/or cycle times and/or make one or more adjustment to the robotic program which can be downloaded from the virtual environment into the controller of the corresponding real robot so that the robot can execute the programmed tasks at the shopfloor.

Advantageously, with embodiments, any 3D graphical application - including but not only a CAR tool - can be connected to the ME predictor 303 specific for the robot and the user 304 can play the simulation of the robot without the need for a robot's kinematic model, a motion planner and/or a kinematic engine 305.

Figures 3B illustrates a sequence 310 of graphical frames for simulating a motion behavior in accordance with disclosed embodiments. In Figure 3B are shown examples of graphic visualization of N images/frames 311, 312, 313, 314 depicting a sequence of N envelops denoted as E1,.., E_{N} representing the motion of a robot moving from a source location L_{S} to a target location L_{T}. In the first image 311, the graphic robot's envelope E1 depicts the robot with the tool center point frame (TCPF) at the source location L_{S}. In the final frame 314, the graphic robot's envelop EN depicts the robot with the TCPF at the target location L_{T}. The user 304 may simulate the motion behavior of the robot moving between the location pair (L_{S}, L_{T}) by animating the sequence of robotic envelopes E₁, ..., Eₙ in the graphical interface.

In embodiments, different ML-modules are trained for different types of robots and/or tools. In embodiments, to advantageously, use the ML-module trained with a different tool, the input data on the robotic source, target locations are given as delta the between the robot's tool frame and the robot's TCPF frame.

In embodiments, the ML module 303 may be used as a stand-alone module, e.g. a cloud service to predict the robotic motion envelope. In other embodiments, the ML module 303 may be used as a stand-alone module by a virtual simulation tool. In other embodiments, the motion ML module may be embedded within a virtual simulation tool or in hybrid configurations e.g. standalone and/or embedded. In embodiments, a virtual robotic simulation tool simulates the motion behavior of one or more specific robots of one or more specific robot vendors with a plurality of ML motion envelop predictors.

Embodiments include avoiding collision or estimating performances and cycle times of industrial robots executing a robotic program in an industrial environment comprising industrial cells with industrial objects. Embodiments enable to create a realistic and collision free animation of the robot's industrial operations in during its robotic target paths within its surrounding environment such that accurate inspections and assessments of the design of the industrial robotic cell can be performed.

With embodiments, the data on the geometry surface of the robot at its initial pose can be received as output of the ME predictor for example by applying input data where the source location L_{S} equals the target location L_{T} with the TCPF at the at the initial home position. Advantageously, a user can load a 3D geometry of a robot's at initial pose at its base frame in a CAR tool for simulation purposes even without having or retrieving a CAD file of the robot. As the skilled in the art knows, the CAD file of the robot contains a description of the geometry of the robot without focusing on its kinematics capabilities such as joint types (e.g. revolute, prismatic), link lengths, degrees of freedom etc that are instead provided with the kinematic model of the robot.

In embodiments, the TCPF trajectory during the robotic program execution can be extracted by recognizing the TCPF within the envelope and tracking TCPF motion sequence from the robotic motion envelope.

With embodiments, users of a CAR tool are able to simulate the motion behavior of a specific industrial robot in a virtual environment without the need of utilizing a robotic kinematic model and/or a motion planner.

Of course, those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A method for simulating, by a data processing system, a motion behavior of a specific industrial robot executing a robotic program within an industrial environment:
a) representing (205) a surface envelope of a robot and its tool as a collection of a subset of their surface points described by their 3D coordinates; herein robot's envelope;
b) receiving (210) data of a set of pairs of robotic locations said location pair data comprising data on a source location, on a target location, on a set of motion parameters of the robot's tool required for executing a segment of the robotic program;
c) for each robotic location pair, applying (215) a motion envelope predictor - herein ME predictor, trained by a machine learning algorithm with training datasets comprising a robotic location pair and a corresponding sequence of robot's envelopes where the ME predictor is configured for generating as output a sequence of robot's envelopes predicting the motion behavior of the robot moving between said location pair;
d) via a 3D application, simulating (220), in a 3D industrial environment, the motion behavior of the robot executing the set of robotic program segments as a dynamic motion envelope of the predicted set of sequences of robotic envelopes.

2. The method of claim 1 wherein the ME predictor is trained via a regression supervised learning algorithm.

3. The method of claim 1 or 2 wherein item d) further includes loading a robot's initial envelop at an initial robot's pose at a robot's base position; wherein said robot's initial envelop is received from the ME predictor by inputting an initial pair of robotic locations.

4. The method of any of the previous claims further comprising controlling a real robot motion according to the simulated motion behavior of item d); wherein said motion behavior is simulated without utilizing a kinematic model of the robot.

5. A data processing system comprising:
a processor; and
an accessible memory, the data processing system particularly configured to:
a) represent a surface envelope of a robot and its tool as a collection of a subset of their surface points described by their 3D coordinates; herein robot's envelope;
b) receive data of a set of pairs of robotic locations said location pair data comprising data on a source location, on a target location, on a set of motion parameters of the robot's tool required for executing a segment of the robotic program;
c) apply, for each robotic location pair, a motion envelope predictor - herein ME predictor, trained by a machine learning algorithm with training datasets comprising a robotic location pair and a corresponding sequence of robot's envelopes where the ME predictor is configured for generating as output a sequence of robot's envelopes predicting the motion behavior of the robot moving between said location pair;
d) via a 3D application, simulate, in a 3D industrial environment, the motion behavior of the robot executing the set of robotic program segments as a dynamic motion envelope of the predicted set of sequences of robotic envelopes.

6. A non-transitory computer-readable medium encoded with executable instructions that, when executed, cause one or more data processing system to:
a) represent a surface envelope of a robot and its tool as a collection of a subset of their surface points described by their 3D coordinates; herein robot's envelope;
b) receive data of a set of pairs of robotic locations said location pair data comprising data on a source location, on a target location, on a set of motion parameters of the robot's tool required for executing a segment of the robotic program;
c) apply, for each robotic location pair, a motion envelope predictor - herein ME predictor, trained by a machine learning algorithm with training datasets comprising a robotic location pair and a corresponding sequence of robot's envelopes where the ME predictor is configured for generating as output a sequence of robot's envelopes predicting the motion behavior of the robot moving between said location pair;
d) via a 3D application, simulate, in a 3D industrial environment, the motion behavior of the robot executing the set of robotic program segments as a dynamic motion envelope of the predicted set of sequences of robotic envelopes.

7. A computer implemented method for generating a training dataset for training a motion envelope predictor configured for outputting a sequence of envelopes of a specific robot, the method comprising:
- receiving data on several robotic location pairs comprising data on a source location, on a target location with associated motion parameters;
- for each location pair, receiving data on a sequence of robot's envelopes capturing at time-intervals the robot's motion behavior during its motion between the location pair; wherein the location pair is collected for populating an input training dataset and the corresponding sequence of robot's envelopes is collected for populating an output training dataset;
- storing the input and output training dataset to train a ML model of the motion envelop predictor.

8. The method of claim 7, the robot's envelopes sequences are obtained either by capturing the specific robot's motion behavior of the virtual robot in a virtual environment via the robot's kinematic model or by capturing the specific robot's motion behavior of the physical robot in a physical environment.

9. A computer implemented method for providing a ML module for outputting a sequence of robot's envelops predicting the motion behavior of a specific robot, the method comprising:
- receiving a training dataset with a first interface, wherein said training dataset comprises an input training dataset and an output training dataset, wherein the input training dataset comprises several robotic location pairs comprising data on a source location, on a target location with associated motion parameters; and the output training dataset comprises, for each robotic location, a corresponding sequence of robot's envelopes;
- training the ML module with the input and output training datasets;
- providing said trained ML module with a second interface.
